(19) Europäisches Patentamt
European Patent Office
Office européen des brevets

(11) **EP 4 243 305 A1**

(12) **EUROPEAN PATENT APPLICATION**

(43) Date of publication:
**13.09.2023 Bulletin 2023/37**

(21) Application number: **22305275.4**

(22) Date of filing: **11.03.2022**

(51) International Patent Classification (IPC):
**H04B 17/391** (2015.01)

(52) Cooperative Patent Classification (CPC):
**H04B 17/3913; H04B 17/309**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.**
**1119 NS Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **NGUYEN, Viet-Hoa**
**35708 RENNES CÉDEX 7 (FR)**
• **GRESSET, Nicolas**
**35708 RENNES CÉDEX 7 (FR)**
• **LI, Qianrui**
**35000 RENNES (FR)**

(74) Representative: **Plasseraud IP**
**66, rue de la Chaussée d'Antin**
**75440 Paris Cedex 09 (FR)**

(54) **A METHOD AND DEVICE FOR AUTOMATED GENERATION OF A RADIO PROPAGATION DIGITAL TWIN IN A RADIOFREQUENCY ENVIRONMENT**

(57) The present invention relates to a method for characterizing a radiofrequency environment, the method comprising:
- obtaining measurements (S1.1) of geometrical properties of physical objects in the radiofrequency environment, said geometrical properties including at least respective positions and dimensions of said physical objects,
- simulating radiofrequency ray-tracings (S1.2) involving a multiplicity of simulated rays, each ray being:
* emitted by a transmitter (Tx) located in said radiofrequency environment in a transmitter position, and/or
* received by a receiver (Rx) located in said radiofrequency environment in a receiver position,

each pair of a transmitter position and a receiver position defining therebetween a radiofrequency path where simulated rays possibly interact with at least a part of said physical objects,
- selecting (S2.1), among all the radiofrequency paths, at least one radiofrequency path defined by simulated rays interacting with the physical objects which interact the most with simulated rays,
- obtaining radiofrequency measurements (S2.2) of a radiofrequency channel defined by the selected path and estimating radiofrequency properties (03.1) of physical objects interacting in said selected path,

Said radiofrequency properties and said geometrical properties of said physical objects characterizing thereby said radiofrequency environment.

EP 4 243 305 A1

FIG. 1

**Description**

The present disclosure relates to a method for automating the generation of a radio propagation digital twin.

"Digital twin" is the concept of creating a virtual representation of a physical object. It allows to gain insights of real object in a flexible, fast and cost-effective way. Typically, by having the digital twin of a propagation channel, one can better allocate the radio resources, optimize the transmission parameters and plan the deployment of an optimized network. The digital representation can be used for various purposes such as evaluation, prediction, optimization, etc. In radio communication, the physical object can exist in the form of a radio propagation environment.

The radio channel between a transmitter and a receiver can be modelled as the propagation of electromagnetic rays in the environment. Electromagnetic rays depart from the transmitter, travel in the environment and finally arrive at the receiver. On the way of reaching the receiver, rays encounter several objects where their path and their electromagnetic properties can change according to the nature of such objects, such as reflection, refraction, diffraction, etc. The changes are also dependent of the radio frequency band and the material of such objects.

Given a 3D sketch of real environment, ray tracing techniques simulate the propagation of the rays and provides details of interactions between them and the environment. A radio propagation digital twin can be built upon the rays and their interactions. The fidelity of the digital representation usually depends on:

-    the detail of rays' geometrical property; and
-    the precision of dielectric property of materials involved in rays' interaction.

The former factor can be feasibly reached by modern ray tracing algorithm with the help of powerful graphics processing unit (GPU). The latter one is more complicated to be obtained. The dielectric property which is involved is the permittivity. This parameter depends in fact not only on the object material but also on the current temperature, humidity, and more importantly on the operating frequency band.

To have an accurate digital twin of the radio propagation channel, the permittivity of objects in the environment needs to be calibrated. The calibration is based on the channel measurements, which allow tuning the model by adjusting the permittivity coefficients, being parameters of the model. The measurement phase is carried by at least one pair of transmitter (Tx) and receiver (Rx) locations, but it is preferrable to perform it from several pairs. Indeed, a single Tx-Rx link cannot capture all the required permittivities, or in some cases cannot characterize well enough the dependency between the radio channel and the permittivities.

Usually, the determination of the location for measurements is heuristic and not based on any solid efficiency evidence. That kind of approach suffers from at least the following disadvantages:

-    First, it requires a human intervention which is costly.
-    Second, the heuristic method cannot guarantee that the measurements are enough for a given performance of calibration (on the contrary, in some cases, the measurements are redundant causing a resource waste).

The present disclosure aims to improve the situation.

To that end, it proposes a computer implemented method for characterizing a radiofrequency environment, the method comprising:

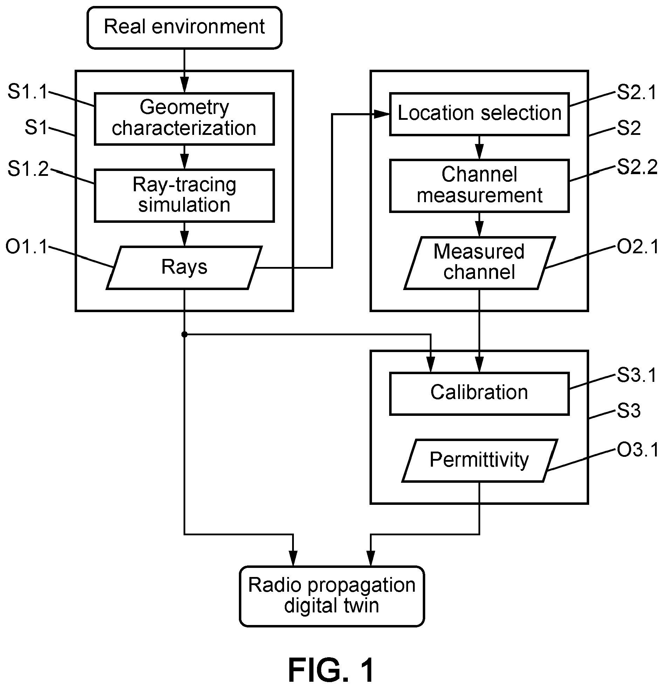

-    obtaining measurements (reference S1.1 of figure 1) of geometrical properties of physical objects in the radiofrequency environment, said geometrical properties including at least respective positions and dimensions of said physical objects,
-    simulating radiofrequency ray-tracings (reference S1.2) involving a multiplicity of simulated rays, each ray being:

        * emitted by a transmitter (noted Tx below) located in said radiofrequency environment in a transmitter position, and/or
        * received by a receiver (noted Rx below) located in said radiofrequency environment in a receiver position,

each pair of a transmitter position and a receiver position defining therebetween a radiofrequency path where simulated rays possibly interact with at least a part of said physical objects,

-    selecting (S2.1), among all the radiofrequency paths, at least one radiofrequency path defined by simulated rays interacting with the physical objects which interact the most with simulated rays,
-    obtaining radiofrequency measurements (S2.2) of a radiofrequency channel defined by the selected path and estimating radiofrequency properties (03.1) of physical objects interacting in said selected path,

Said radiofrequency properties and said geometrical properties of said physical objects characterizing thereby said radiofrequency environment.

Therefore, the subject-matter of the present disclosure makes it possible to minimize the radiofrequency measurements to perform in the environment, gaining thereby time and memory resources.

Once the radiofrequency properties and the geometrical properties of the physical objects are obtained, it is possible to characterize the radiofrequency environment, and the method, in an embodiment, can further comprise thus:

- generating a radio propagation digital twin from said characterization of the radiofrequency environment.

It is therefore possible to create a digital copy of a radio environment, to optimize deployment of an emitting and/or receiving antenna, optimize positions of access points (base stations for example or Wifi home gateways), and to predict the radio frequency performance of base stations or gateways, their coverage, etc. in a room or in nature, or in urban environment with buildings, etc. Another application is to assist resource allocation, for example to provide more power locally (in an application of network planning typically).

Typically, in an embodiment, said selected radiofrequency path defines a transmitter (Tx) position and a receiver (Rx) position, and the method further comprises:

- piloting at least one robot carrying at least one of a transmitting antenna and a receiving antenna, so as to position said robot at one of said transmitter position and receiver position, and control the robot to carry out said radiofrequency measurements (S2.2) at said one of said transmitter position and receiver position.

In such an embodiment, when a plurality of radiofrequency paths is selected (S2.1) a fixed transmitting antenna (Tx) can be provided, while the robot can be equipped with a receiving antenna (Rx) and be piloted to occupy successive receiver positions defined by said selected paths. Alternatively, a receiving fixed antenna can be provided, while the robot carries a transmitting antenna and moves from successive transmitter positions.

In an embodiment, said simulation of ray-tracings comprises:

- subdividing each simulated ray into subpaths where the simulated ray is deemed to encounter a physical object of the radiofrequency environment,

- estimating an interaction of the simulated ray with the physical object encountered in a subpath, and

- for each interaction, estimating and recording at least:

    * a nature of interaction among at least a reflection, a refraction, a diffraction,

    * an incident angle of the ray relatively to the encountered physical object, and

    * data of the encountered physical object.

For example, this data of the encountered object can be an identifier k of a material forming this object, or a radiofrequency permittivity value of that material in an example of embodiment presented below.

In the definition given above, the selected (S2.1) radiofrequency paths defined by simulated rays interacting with the physical objects "which interact the most with simulated rays" can be defined by assigning respective scores of interaction to those physical objects interacting with the simulated rays.

In the example of embodiment presented below, the highest score of interaction can correspond to the greater global variation of radiofrequency channels (which implies greater global variations on channels defined finally by the selected radiofrequency paths).

Alternatively, the selected paths can be the ones who have the highest numbers of subpaths (i.e. encountering many objects). This can be an alternative metric to select said "at least one radiofrequency path".

In the embodiment of the "impact on the radiofrequency channel", the physical objects which interact the most with the rays can be thus defined as having a highest impact on an estimation of a radiofrequency channel h modelled by rays that depart from a transmitter (Tx), interact with physical objects of the radiofrequency environment, and successfully arrive to a receiver (Rx).

More particularly, the estimation of the radiofrequency channel h can be given by:

$$h = \sum_p \beta_p \, \mathrm{F}_p^{Rx} \left( \prod_{i_p} \mathbf{D}^{i_p} \left( \theta^{i_p}, \eta(i_p) \right) \right) \mathrm{F}_p^{Tx} \delta(\tau_p), \qquad (1)$$

where :

- p denotes an index of a ray, and $\delta(\tau_p)$ is a Dirac function applied to a delay of a ray p departing from a transmitter (Tx) to arrive at a receiver (Rx);
- $i_p$ denotes an index of an incident encountered by ray p and due to an interaction with a physical object;
- $\beta_p$ is a radiofrequency path loss of ray p;
- $\mathrm{F}_p^{Tx}$ is a transmitting antenna response at departure angle of ray p;
- $\mathrm{F}_p^{Rx}$ is a receiving antenna response at arrival angle of ray p;
- $\mathbf{D}^{i_p}$ is a depolarisation matrix of ray p due to the incident $i_p$, said matrix depending on an angle of incident $\theta^{i_p}$, and a radiofrequency property, noted $\eta(i_p)$, of a physical object that ray p interacts with in the incident $i_p$.

The selecting of the radiofrequency path (S2.1) can comprise then, in an example of embodiment:

- counting a number $K$ of physical objects in the environment and assigning to each object a value $(\eta_1,..,\eta_K)$ of a predetermined parameter of a radiofrequency property to be determined by said radiofrequency measurements,
- defining a possible range $R_k$ for each given value of said predetermined parameter $\eta_k$ varying thereby according to said range $R_k$, while fixing all other values of said predetermined parameter to assigned respective default values,
- evaluating a variation for all channels $h(\eta_k)$ in the radiofrequency environment by using rays resulting from said simulation of ray-tracings, when said given value $\eta_k$ varies in said range,
- estimating, for each physical object, a score $s_k$ given by

$$s_k = \frac{1}{|\mathcal{R}_k|} \sum_{\eta_k \in \mathcal{R}_k} |h(\eta_k) - m_h|^2, \qquad (2)$$

where $m_h$ is an average of channel $h(\eta_k)$, when value $\eta_k$ varies in range $R_k$,
- selecting, among possible paths, at least one path interacting with physical objects having highest scores $s_k$.

In another approach, the selecting of the radiofrequency path (S2.1) can comprise alternatively:

- assigning to each object $k$ a value $\eta_k$ of a predetermined parameter of a radiofrequency property to be determined by said radiofrequency measurements,
- for each ray p defined by said simulation of ray-tracings, counting a number $n(p,k)$ of times that said ray p interacts with an object $k$, and expressed as:

$$n(p,k) = \sum_{i_p} \delta(\eta(i_p) - \eta_k). \qquad (3)$$

- estimating for each physical object a score of value $\eta_k$ of said predetermined parameter, denoted as $s_k$, and obtained by weighting said number by a radiofrequency path loss $\beta_p$ of ray p as follows:

$$s_k = \sum_p \frac{\beta_p}{\Sigma_p \beta_p} n(p,k) \qquad (4)$$

- selecting, among possible paths, at least one path interacting with physical objects having highest scores $s_k$.

Before selecting said at least one path interacting with physical objects having highest scores $s_k$ and once said

scores are estimated, it is possible to implement a filtering to eliminate objects having values of said predetermined parameter below a negligence threshold.

The selecting of at least one path interacting with physical objects having highest scores $s_k$ can be performed by minimizing a number of radiofrequency measurements to perform while guaranteeing that physical object having values of said predetermined parameter which are above a significance threshold are captured.

Of course, the significance threshold is higher than the negligence threshold.

In an embodiment, as indicated above the aforesaid value of the predetermined parameter of a radiofrequency property can be a value of a radiofrequency permittivity, and the radiofrequency properties (related to item 03.1 of figure 1) can comprise at least respective radiofrequency permittivities of the physical objects.

However, alternatively, besides the permittivity as a radiofrequency property, it is possible also to estimate, complementarily or alternatively, a factor of roughness of objects with the aforesaid radiofrequency measurement. This can be made in fact thanks to the radiofrequency diffusion mechanism (also called "diffuse reflection") of wave propagation. When the wave encounters a rough (i.e. not flat) surface, the energy is scattered in several directions (rather than in only reflected direction if the surface is perfectly flat). The diffusion effect becomes more relevant when the roughness value is within a same scale as the radiofrequency wavelength.

Therefore, in this alternative embodiment, the aforesaid value of the predetermined parameter of a radiofrequency property can be a value of roughness, and the radiofrequency properties (related to item 03.1 of figure 1) can comprise at least respective roughness values of the physical objects.

The present disclosure aims also at a computer program comprising instructions which, when the program is executed by a computer, cause the computer to carry out the method above. It aims also at a non-transitory computer storage medium, storing the instructions of such a computer program.

It aims also at a system for implementing the method and comprising:

- a physical object sensor for obtaining measurements (S1.1) of said geometrical properties of the physical objects in the radiofrequency environment,
- a computer connected to said physical object sensor to receive data of said geometrical properties, and comprising a computing circuit for simulating said radiofrequency ray-tracings (S1.2) and for selecting (S2.1) said at least one radiofrequency defining respective positions of a transmitter (Tx) and of a receiver (Rx), and
- a transmitting antenna and a receiving antenna respectively located in said respective positions of a transmitter (Tx) and of a receiver (Rx), for carrying out said radiofrequency measurements (S2.2).

Typically, in an embodiment of that system, it can further comprise at least one robot carrying at least one of a transmitting antenna and a receiving antenna, and connected to the computer for receiving control data comprising points coordinates of at least one of said positions of a transmitter (Tx) and of a receiver (Rx), so as to position said robot at one of said transmitter position and receiver position, and control the robot to carry out said radiofrequency measurements (S2.2) at said one of said transmitter position and receiver position.

More details and advantages of the present disclosure will be understood when reading the following description of embodiments given below as examples, and will appear from the related drawings where:

- Figure 1 shows an example of embodiment of the method for an automated generation of radio propagation digital twin,

- Figure 2 shows an example of embodiment of step S2 of figure 1,

- Figure 3 shows, as an example, a 3D sketch of environment,

- Figure 4 shows the scores of materials using an exhaustive scoring method presented below,

- Figure 5 shows a cumulative distribution function (CDF) of channel prediction error for three different methods of paths selection,

- Figure 6 shows an exemplary embodiment of a system to perform the method presented above.

The process to create a radio propagation digital twin is described hereafter with reference to figure 1.

The first general step S1 is related to a ray-tracing simulation. More particularly, given a real environment, first step S1.1 aims to create a sketch that contains the geometrical properties of physical objects in the environment. This can be done by using an autonomous device ("unnamed device" hereafter), equipped a camera sensor or LIDAR sensor or any sensor with the capability of capturing the geometrical property. The geometrical properties can be listed as follows:

- Position
- Orientation
- Dimension

Then, a multi-link deployment is set. This consists in defining multiple pairs of Tx and Rx positions in the environment. In next step S1.2, a ray tracing algorithm is used for given Tx-Rx positions and the geometry characterization of environment, so as to obtain rays that successfully depart from a Tx position and arrive to a corresponding Rx position. In step O1.1, the ray is finally represented by its subpaths and its interactions with objects in the environment. For every interaction, the nature of interaction (reflection, refraction, diffraction, etc), the incident angle and the encountered material are recorded.

Then, general step S2 relates to measurement implementation. More particularly, in step S2.1, at least one pair of Tx-Rx positions is selected to measure the channel. In general, it can be preferred to use rather several pairs. The selection is autonomously made by a computer in exploiting the rays' information in O1.1. This step S2.1 is for the purpose of making sure that all materials that have an important role in the propagation environment, are well captured into channel measurements. In step S2.2, given Tx-Rx positions, at least one radiofrequency device is mobilized in the scene to measure the channel. This device is capable to move in an autonomous way. Step O2.1 is then performed so as to determine whether the measured channel can exist in at least one of the following forms: channel impulse response (CIR), channel gain, etc. More generally, step O2.1 is performed so as to determine whether a currently measured channel can exist according to any parameter defining a radiofrequency channel.

General step S3 relates then to calibration. More particularly, in step S3.1, the channel is modelled by rays that depart from Tx, interact with environment, and successfully arrive to Rx. This can be described by a mathematical expression that can be written as follows

$$h = \sum_p \beta_p \, \mathrm{F}_p^{Rx} \left( \prod_{i_p} \mathbf{D}^{i_p} \left( \theta^{i_p}, \eta(i_p) \right) \right) \mathrm{F}_p^{Tx} \delta(\tau_p), \qquad (5)$$

where :

- p denotes the index of a ray, and $\delta(\tau_p)$ is a Dirac function applied to a delay of a ray p departing from a transmitter (Tx) to arrive at a receiver (Rx);

- $i_p$ denotes the index of an obstacle or more general any incident encountered by ray p;

- $\beta_p$ is the path loss of ray p;

- $\mathrm{F}_p^{Tx}$ is an antenna response at departure angle of ray p;

- $\mathrm{F}_p^{Rx}$ is the antenna response at arrival angle of ray p;

- $\mathbf{D}^{i_p}$ is the depolarisation matrix of ray p due to the incident $i_p$.

$\mathbf{D}_p^i$ depends on the angle of incident $\theta^{ip}$, and the permittivity $\eta(i_p)$ of an object that a ray p encounters in the incident $i_p$.

The ray-tracing simulation provides all parameters except the value of $\eta(i_p)$. This step O3.1 uses the measured channel, i.e. step O2.1, and corresponding modelled channel, i.e. equation (5), to tune the estimation of permittivity $\eta(i_p)$. Finally, the output of step O3.1 is therefore the estimated permittivities. These permittivities are used with ray's geometrical property (provided by ray-tracing) to predict the channel for all channels in the environment.

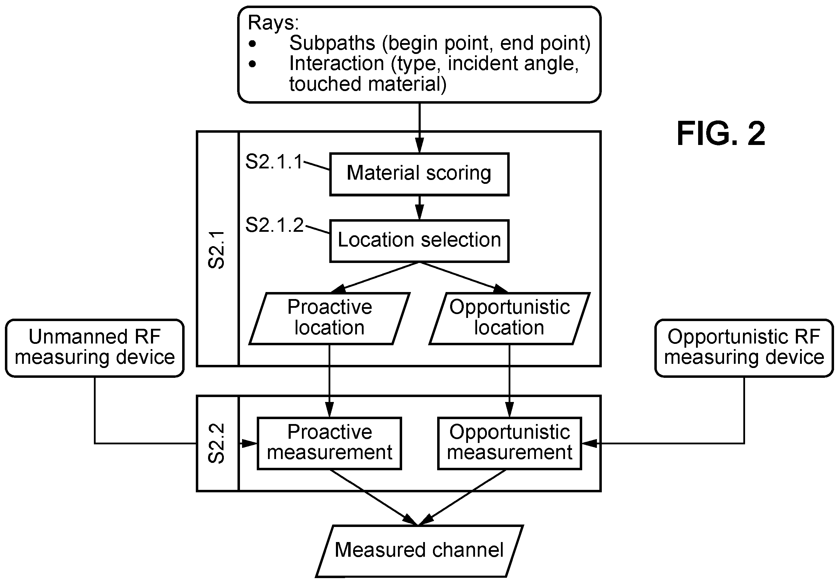

The present disclosure intends to eliminate the human intervention in step S2.1 and therefore to make the process entirely autonomous since all remaining steps can be easily automated. To automate this step S2.1, it is proposed to exploit the rays' data, being the output of S1, by which the computer can analyse by itself the situation and therefore can autonomously determine appropriate positions for measurements. Step S2 of figure 1 is further detailed in figure 2.

All materials involved in rays' interactions, issued by step S1 are scored according to how important is the role they play in the propagation channels.

Once the scores are accomplished, the location selection step S2.1 globally evaluates materials and positions to find out the best positions for measurement. The selection criteria also depend on the intention, for example: maximizing the accuracy, minimizing the cost (time, effort, etc).

The selected positions afterward can be classified into two main categories:

- proactive positions, and
- opportunistic positions.

The first category of "proactive positions" indicates the locations, depending on the environment, where an unmanned device can access to carry out the measurement. The second category of "opportunistic positions" is for the fact that, some positions are sometimes not accessible and therefore are reserved for opportunistic measurement. This type of measurement is triggered if, in the future, any device (with the measuring capability) has access to such positions.

In another application of the present disclosure, linked with the opportunistic measurement mechanism, the digital twin of the radio propagation channel has already been built and is updated in time. Thus, the communication system is operational, and it is of interest to exploit some current positions of any active terminal (such as a user equipment) to request measurements and update a database of the radiofrequency environment.

The following focuses on step S2.1, since this is the only step which needs to be automated, compared to the usual prior art.

Step S2.1.1 relates to a so-called "facet scoring", and consists in scoring the materials involved in the interactions of all rays. This is due to the arrangement of objects in environment which results in that some obstacles play more important role in defining the propagation channel than others. Hereafter, K denotes the number of facets in the environment, so that the set of all permittivities is $(\eta_1,..,\eta_K)$. Two scoring methods can be proposed below:

- Exhaustive scoring: a possible range $R_k$ for each permittivity $\eta_k$ is defined and then this permittivity $\eta_k$ is made to vary according to this range $R_k$, while all other permittivities are fixed to assigned respective default values. The variation of all channels in the environment is evaluated, using the rays (simulated by ray-tracing), when the involved permittivity varies in its range. The greater score corresponds to the greater global variation of channels:

$$s_k = \frac{1}{|\mathcal{R}_k|} \sum_{\eta_k \in \mathcal{R}_k} |h(\eta_k) - m_h|^2, \qquad (6)$$

where $m_h$ is the average of channel $h(\eta_k)$, when $\eta_k$ varies in $R_k$.

- Weighted count scoring: For each ray p, the number of times it touches material $k$ is counted, this number being expressed as follows:

$$n(p,k) = \sum_{i_p} \delta(\eta(i_p) - \eta_k). \qquad (7)$$

The score of permittivity $\eta_k$, being denoted as $s_k$, is then weighted by the path loss of ray p as follows

$$s_k = \sum_p \frac{\beta_p}{\sum_p \beta_p} n(p,k) \qquad (8)$$

Once the scores are obtained, a filtering step is proposed to eliminate unimportant permittivities. The purpose is to reduce the complexity while maintaining the accuracy of the process. To do so, a threshold for any score $s_k$ can be defined, below which the material k is removed from consideration.

Based upon the remaining materials and their score, the location selection is proceeded in step S2.1.2. Two methods can be implemented to select measuring locations, as follows:

- Minimum number of measurements ("MinNb" for short hereafter): the principle is to minimize the number of measurement sites while guaranteeing that all important permittivities are captured.
- Best score measurements ("Bestscore" for short): in the same fundamental requirement that all important permittivities are captured, it is aimed to enhance the accuracy of calibration in step S3 by selecting the locations where considered permittivities have a strong impact.

The output can be classified then into two categories, as follows:

- Proactive locations: in this approach, which can be preferred for the initial construction of the aforesaid database, the measurements locations are precomputed, which allows to define the mission of the unmanned (or maned) measurement campaign. Due to the geometrical property of environment (a factory, urban, rural, etc) and the type of unmanned device (robot, drone, etc), not all locations are accessible, and this should be taken into account in the planning;

- Opportunistic locations: in this approach, the digital twin of the radio propagation channel has already been built and is updated in time. Thus, the communication system is operational, and it is of interest to exploit the current positions of an active terminal to request measurements and update the aforesaid database. In order to avoid too much overhead, it is of interest to have a criterion to decide whether a current a terminal position is favourable for the database update. Thus, the previous scores can be combined with a current reliability metric of the database. A use of such a reliability metric can be illustrated in two following examples:

  • Reliability of prediction: in the use of digital twin for predicting the propagation channel, the reliability metric can be defined as the prediction error. An acceptance threshold can be set for the prediction error. In the case the prediction error exceeds the threshold, a request for measurement can be triggered for updating the digital twin, typically.
  • Reliability of optimization: the digital twin can be used to optimize a process in radio communication, for example: the beamforming, the channel estimation, etc. Denote the performance of the optimization with an updated digital twin as $Perf_0$, and the performance at a moment t as $Perf_t$, a threshold $\varepsilon$ can be defined such as : if $Perf_0 - Perf_t > \varepsilon$, it can be stated then that the digital twin is outdated. In this case, a request of new measurement can be activated.

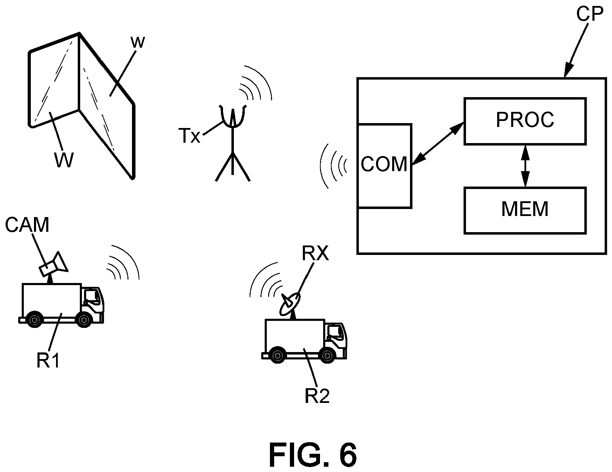

With reference to figure 6, a sensor such as a camera CAM can be mounted on a first robot R1 to determine positions, dimensions, orientations, etc. of physical objects (such as walls W, ceiling, floor, tables, chairs, etc.) in an environment. The robot R1 can be piloted to as move in the environment in view to determine the presence of all physical objects of the environment. The data of the geometrical properties (positions, dimensions, orientations, etc.) of these physical objects are sent to and stored in a memory MEM of a computer CP. The computer CP comprises to that end a communication interface COM to receive such data. The computer CP further includes a computing circuit comprising a processor PROC and the memory MEM storing typically codes of instructions of a computer program according to the present disclosure. The processor PROC is configured to cooperate with the memory MEM so as to read the aforesaid instructions and implement the calculations presented above and finally the selection of the best paths defining respective positions of a transmitter (Tx) and a receiver (Rx) to be positioned in the environment, at which positions the radiofrequency measurements will be the most efficient to characterize the radiofrequency twin of the environment.

In the example of figure 6, a fixed transmitting antenna (Tx) is positioned in the environment, while an automated robot R2 moves from a receiver position (Rx) to another and carries a receiving antenna to perform the aforesaid radiofrequency measurements on a channel defined by a radiofrequency path between the transmitting antenna position (Tx) and the current robot position (Rx).

Alternatively, a receiving antenna (Rx) can have a fixed position, while the robot carries a transmitting antenna (Tx). Alternatively also, a first robot can carry a transmitting antenna (Tx) and a second robot can carry a receiving antenna (Rx), both robots being connected to and piloted by the computer PC.

Of course a same robot R1 ,R2 can be used for both sensing the objects of the environment (a carries then a camera CAM) and performing the radiofrequency measurements (an carries a transmitting or receiving antenna).

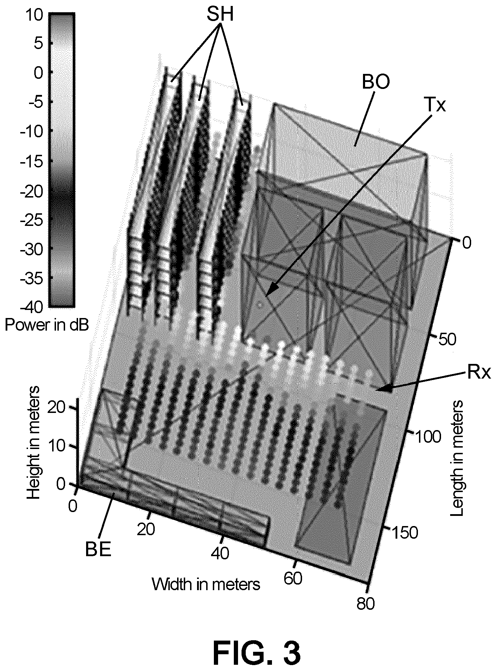

In an example of embodiment given below, a warehouse, measuring 80 meters in width, 180 meters in length, and 20 meters in height, is considered. There are some shelfs SH, benches BE, boxes BO, etc; arranged in the scene as shown in figure 3. In this warehouse, one access point (Tx) is deployed as a transmitting antenna in a fixed position, and a set of possible receiver positions (Rx) is determined (as shown also in figure 3).

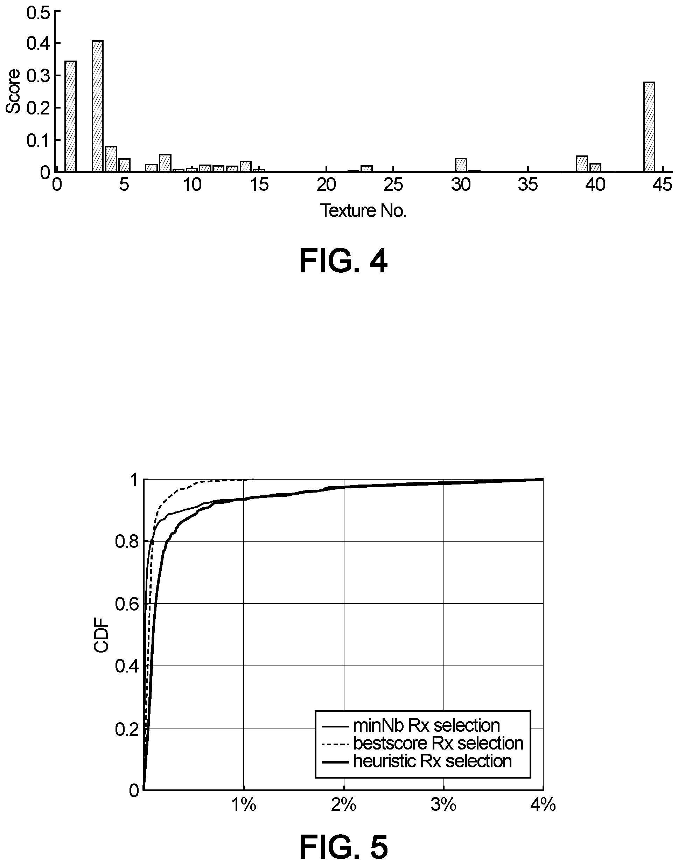

The 3D sketch of the warehouse is inputted in a ray-tracing algorithm to obtain the rays. In this scenario, there are 45 permittivities taken into consideration. The exhaustive scoring method is used here to evaluate the importance of all permittivities. The scores are then shown in figure 4.

Next, these scores are used to select receiver positions (Rx) for measurements. Two proposed autonomous selection methods, i.e. MinNb and Bestscore, are then implemented. The MinNb method determines 4 Rx locations and the Bestscore method determines 7 Rx locations. Based on the result of MinNb selection method, a heuristic selection (done by human intervention) is used for determining also 4 Rx locations for measurement. The purpose is to have a reference to compare between machine labour and human labour in this task. In this example, all locations are considered accessible for the measuring device (a robot having a receiving antenna and being able to occupy successive Rx positions).

The measurement is carried out on the selected Rx positions for all methods. Afterward, a neural network is used for calibrating the permittivities, based on measurements and rays-based channel model. The calibrated channel model is finally used for predicting the channel impulse response of all possible Rx positions (as shown in the example of figure 3). Then, figure 5 shows the statistic of channel prediction error for the above-mentioned three selection methods. It appears then, with the same number of Rx positions, that the proposed MinNb method offers smaller error than a heuristic method. Taking advantage from Rx locations with better scores and a greater number of measurements (7 compared to 4), the Bestscore method proposes more particularly a considerable enhancement.

**Claims**

1. A computer implemented method for characterizing a radiofrequency environment, the method comprising:

   - obtaining measurements (S1.1) of geometrical properties of physical objects in the radiofrequency environment, said geometrical properties including at least respective positions and dimensions of said physical objects,
   - simulating radiofrequency ray-tracings (S1.2) involving a multiplicity of simulated rays, each ray being:

      * emitted by a transmitter (Tx) located in said radiofrequency environment in a transmitter position, and/or
      * received by a receiver (Rx) located in said radiofrequency environment in a receiver position,

   each pair of a transmitter position and a receiver position defining therebetween a radiofrequency path where simulated rays possibly interact with at least a part of said physical objects,

   - selecting (S2.1), among all the radiofrequency paths, at least one radiofrequency path defined by simulated rays interacting with the physical objects which interact the most with simulated rays,
   - obtaining radiofrequency measurements (S2.2) of a radiofrequency channel defined by the selected path and estimating radiofrequency properties (03.1) of physical objects interacting in said selected path,

   Said radiofrequency properties and said geometrical properties of said physical objects characterizing thereby said radiofrequency environment.

2. The method of claim 1, further comprising:

   - generating a radio propagation digital twin from said characterization of the radiofrequency environment.

3. The method according to anyone of the precedent claims, wherein said selected radiofrequency path defines a transmitter (Tx) position and a receiver (Rx) position, and the method further comprises:

   - piloting at least one robot carrying at least one of a transmitting antenna and a receiving antenna, so as to position said robot at one of said transmitter position and receiver position, and control the robot to carry out said radiofrequency measurements (S2.2) at said one of said transmitter position and receiver position.

4. The method according to claim 3, wherein a plurality of radiofrequency paths are selected (S2.1) and wherein :

   - a fixed transmitting antenna (Tx) is provided, and
   - the robot is equipped with a receiving antenna (Rx) and is piloted to occupy successive receiver positions defined by said selected paths.

5. The method according to anyone of the precedent claims, wherein said simulation of ray-tracings comprises:

   - subdividing each simulated ray into subpaths where the simulated ray is deemed to encounter a physical object of the radiofrequency environment,
   - estimating an interaction of the simulated ray with the physical object encountered in a subpath, and
   - for each interaction, estimating and recording at least:

      * a nature of interaction among at least a reflection, a refraction, a diffraction,
      * an incident angle of the ray relatively to the encountered physical object, and

* data of the encountered physical object.

6. The method according to anyone of the precedent claims, wherein said physical objects which interact the most with the rays are defined as having a highest impact on an estimation of a radiofrequency channel h modelled by rays that depart from a transmitter (Tx), interact with physical objects of the radiofrequency environment, and successfully arrive to a receiver (Rx).

7. The method according to claim 6, wherein the estimation of the radiofrequency channel h is given by:

$$h = \sum_p \beta_p \, F_p^{Rx} \left( \prod_{i_p} \mathbf{D}^{i_p} \left( \theta^{i_p}, \eta(i_p) \right) \right) F_p^{Tx} \delta(\tau_p), \qquad (9)$$

where :

- p denotes an index of a ray, and $\delta(\tau_p)$ is a Dirac function applied to a delay of a ray p departing from a transmitter (Tx) to arrive at a receiver (Rx);
- $i_p$ denotes an index of an incident encountered by ray p and due to an interaction with a physical object;
- $\beta_p$ is a radiofrequency path loss of ray p;
- $F_p^{Tx}$ is a transmitting antenna response at departure angle of ray p;
- $F_p^{Rx}$ is a receiving antenna response at arrival angle of ray p;
- $\mathbf{D}^{i_p}$ is a depolarisation matrix of ray p due to the incident $i_p$, said matrix depending on an angle of incident $\theta^{i_p}$, and a radiofrequency property, noted $\eta(i_p)$, of a physical object that ray p interacts with in the incident $i_p$.

8. The method according to claim 7, wherein said selecting of the radiofrequency path (S2.1) comprises:

- counting a number $K$ of physical objects in the environment and assigning to each object a value $(\eta_1,..,\eta_K)$ of a predetermined parameter of a radiofrequency property to be determined by said radiofrequency measurements,
- defining a possible range $R_k$ for each given value of said predetermined parameter $\eta_k$ varying thereby according to said range $R_k$, while fixing all other values of said predetermined parameter to assigned respective default values,
- evaluating a variation for all channels $h(\eta_k)$ in the radiofrequency environment by using rays resulting from said simulation of ray-tracings, when said given value $\eta_k$ varies in said range,
- estimating, for each physical object, a score $s_k$ given by

$$s_k = \frac{1}{|\mathcal{R}_k|} \sum_{\eta_k \in \mathcal{R}_k} |h(\eta_k) - m_h|^2, \qquad (10)$$

where $m_h$ is an average of channel $h(\eta_k)$, when value $\eta_k$ varies in range $R_k$,
- selecting, among possible paths, at least one path interacting with physical objects having highest scores $s_k$.

9. The method according to claim 7, wherein said selecting of the radiofrequency path (S2.1) comprises:

- assigning to each object $k$ a value $\eta_k$ of a predetermined parameter of a radiofrequency property to be determined by said radiofrequency measurements,
- for each ray p defined by said simulation of ray-tracings, counting a number $n(p,k)$ of times that said ray p interacts with an object $k$, and expressed as:

$$n(p,k) = \sum_{i_p} \delta(\eta(i_p) - \eta_k). \qquad (11)$$

- estimating for each physical object a score of value $\eta_k$ of said predetermined parameter, denoted as $s_k$, and obtained by weighting said number by a radiofrequency path loss $\beta_p$ of ray p as follows:

$$s_k = \sum_p \frac{\beta_p}{\sum_p \beta_p} n(p,k) \qquad\qquad (12)$$

- selecting, among possible paths, at least one path interacting with physical objects having highest scores $s_k$.

10. The method according to anyone of claims 8 and 9, wherein, before selecting said at least one path interacting with physical objects having highest scores $s_k$ and once said scores are estimated, a filtering is implemented to eliminate objects having values of said predetermined parameter below a negligence threshold.

11. The method according to anyone of claims 8 to 10, wherein said selecting of at least one path interacting with physical objects having highest scores $s_k$ is performed by minimizing a number of radiofrequency measurements to perform while guaranteeing that physical object having values of said predetermined parameter which are above a significance threshold are captured.

12. The method according to claim 11 taken in combination with claim 10, wherein the significance threshold is higher than the negligence threshold.

13. The method according to anyone of the claims 8 to 12, wherein said value of said predetermined parameter of radiofrequency property is a value of a radiofrequency permittivity, said radiofrequency properties (03.1) comprising at least respective radiofrequency permittivities of said physical objects.

14. A computer program comprising instructions which, when the program is executed by a computer, cause the computer to carry out the method according to anyone of claims 1 to 13.

15. A system for implementing the method according to anyone of the claims 1 to 13, comprising:

- a physical object sensor for obtaining measurements (S1.1) of said geometrical properties of the physical objects in the radiofrequency environment,
- a computer connected to said physical object sensor to receive data of said geometrical properties, and comprising a computing circuit for simulating said radiofrequency ray-tracings (S1.2) and for selecting (S2.1) said at least one radiofrequency defining respective positions of a transmitter (Tx) and of a receiver (Rx), and
- a transmitting antenna and a receiving antenna respectively located in said respective positions of a transmitter (Tx) and of a receiver (Rx), for carrying out said radiofrequency measurements (S2.2).

16. The system of claim 15, further comprising at least one robot carrying at least one of a transmitting antenna and a receiving antenna, and connected to the computer for receiving control data comprising points coordinates of at least one of said positions of a transmitter (Tx) and of a receiver (Rx), so as to position said robot at one of said transmitter position and receiver position, and control the robot to carry out said radiofrequency measurements (S2.2) at said one of said transmitter position and receiver position.

FIG. 1

**FIG. 2**

Rays:
- Subpaths (begin point, end point)
- Interaction (type, incident angle, touched material)

S2.1

S2.1.1 — Material scoring

S2.1.2 — Location selection

Proactive location

Opportunistic location

Unmanned RF measuring device

Opportunistic RF measuring device

S2.2

Proactive measurement

Opportunistic measurement

Measured channel

FIG. 3

## FIG. 4

## FIG. 5

FIG. 6

Europäisches
Patentamt

European
Patent Office

Office européen
des brevets

# EUROPEAN SEARCH REPORT

Application Number

EP 22 30 5275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHARBONNIER ROMAIN ET AL: "Calibration of Ray-Tracing With Diffuse Scattering Against 28-GHz Directional Urban Channel Measurements", IEEE TRANSACTIONS ON VEHICULAR TECHNOLOGY, IEEE, USA, vol. 69, no. 12, 18 November 2020 (2020-11-18), pages 14264-14276, XP011833960, ISSN: 0018-9545, DOI: 10.1109/TVT.2020.3038620 [retrieved on 2021-01-22] | 1-7, 14-16 | INV. H04B17/391 |
| A | * the whole document * | 8-13 | |
| A | PRIEBE SEBASTIAN ET AL: "Ultra broadband indoor channel measurements and calibrated ray tracing propagation modeling at THz frequencies", JOURNAL OF COMMUNICATIONS AND NETWORKS, NEW YORK, NY, USA,IEEE, US, vol. 15, no. 6, 1 December 2013 (2013-12-01), pages 547-558, XP011537195, ISSN: 1229-2370, DOI: 10.1109/JCN.2013.000103 [retrieved on 2014-01-15] * the whole document * | 1-16 | |
| A | EP 3 509 231 A1 (SAMSUNG ELECTRONICS CO LTD [KR]) 10 July 2019 (2019-07-10) * the whole document * | 1-16 | |

TECHNICAL FIELDS
SEARCHED (IPC)

H04B

The present search report has been drawn up for all claims

| Place of search | Date of completion of the search | Examiner |
|---|---|---|
| The Hague | 29 August 2022 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5275

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2022

| Patent document cited in search report | | Publication date | Patent family member(s) | | Publication date |
|---|---|---|---|---|---|
| EP 3509231 | A1 | 10-07-2019 | AU | 2017360282 A1 | 18-04-2019 |
| | | | CN | 109964422 A | 02-07-2019 |
| | | | EP | 3509231 A1 | 10-07-2019 |
| | | | KR | 20180055631 A | 25-05-2018 |
| | | | US | 2019342763 A1 | 07-11-2019 |

For more details about this annex : see Official Journal of the European Patent Office, No. 12/82

EPO FORM P0459